# EUROPÄISCHE PATENTSCHRIFT

(11) **EP 2 023 228 B1**
(45) Veröffentlichungstag und Bekanntmachung des Hinweises auf die Patenterteilung: **30.09.2015**
(21) Anmeldenummer: 08012458.9
(22) Anmeldetag: 10.07.2008
(51) Int. Cl.: G05G 1/46, B60K 23/02, G05G 1/00, G05G 1/487, G05G 5/03, G05G 7/04, G05G 23/00, G05G 23/02, F16D 25/08

(54) **Vorrichtung und Verfahren zur Justierung der Lage miteinander in Wirkverbindung stehender Komponenten einer Pedalanordnung zur Unterstützung der Pedalkraft in einem Fahrzeug**
Device and method for adjusting the position of components of a pedal assembly in working connection to each other for supporting pedal force in a vehicle
Dispositif et procédé d'ajustement de la position de composants d'un dispositif de pédale destiné à soutenir la force de pédalage dans un véhicule

(30) Priorität: 07.08.2007 DE 102007037223
(43) Veröffentlichungstag der Anmeldung: 11.02.2009
(73) Patentinhaber: Schaeffler Technologies AG & Co. KG, 91074 Herzogenaurach (DE)
(72) Erfinder: Greb, Peter, 77815 Bühl (DE)

(56) Entgegenhaltungen:
- EP-A2- 1 956 462
- US-A- 5 771 752

## Beschreibung

Die Erfindung betrifft eine Vorrichtung und ein Verfahren zur Justierung miteinander in Wirkverbindung stehender Komponenten einer Pedalanordnung zur Unterstützung der Pedalkraft in einem Fahrzeug mit den Merkmalen des Oberbegriffs des Anspruchs 1.

In der DE 102 30 855 A1 wird eine Lösung für eine Pedalanordnung beschrieben, bei der ein bereits am Fahrzeug befestigter Pedalbock in der Endmontage mit seinem an diesem befestigten Pedal mit der Kolbenstange eines Geberzylinders komplettiert werden kann. Dazu ist am Pedalhebel ein Aufnahmestück befestigt, das eine Lagerpfanne zur Aufnahme des Endabschnitts der Kolben- bzw. Betätigungsstange enthält. Während das Aufnahmestück in der Aufnahme am Pedalhebel gegen jegliche Relativbewegung zum Pedalhebel gesichert ist, bildet es zusammen mit der Lagerpfanne ein Gelenk, welches die Schwenkbewegung des Pedalhebels zum Lagerbock kompensiert. Im zusammengebauten Zustand sind somit die beiden Bauteile Pedalhebel und Geberzylinder über die Betätigungsstange zug- und druckfest miteinander gekoppelt.

Das Dokument EP 1 956 462 wird als nächstliegender Stand der Technik erkannt und offenbart eine Vorrichtung und ein Verfahren wie in der Oberbegriffen der unabhängigen Ansprüchen.

Diese Lösung ist für eine Pedalanordnung anwendbar, die als Baugruppe nur noch an die entsprechenden Hydraulikkomponenten angeschlossen zu werden braucht, wobei eine Justierung der miteinander in Wirkverbindung stehenden Komponenten aufgrund von Toleranzabweichungen jedoch nicht erforderlich ist.

Daher besteht die Aufgabe der Erfindung darin, eine kostengünstige Lösung für die Justierung der Lage der miteinander in Wirkverbindung stehenden Komponenten einer Pedalanordnung zu finden, die ohne Zuhilfenahme einer Messeinrichtung ausführbar ist und mit der außerdem die Toleranzen der Einzelbauteile ausgeglichen werden können.

Diese Aufgabe wird mit einer Vorrichtung und einem Verfahren zur Justierung der Lage miteinander in Wirkverbindung stehender Komponenten einer Pedalanordnung mit den Merkmalen der Ansprüche 1 und 6 gelöst. Vorteilhafte Ausgestaltungen ergeben sich aus den jeweils zugehörigen Unteransprüchen.

Die Erfindung wird nachfolgend anhand eines Ausführungsbeispiels und zugehöriger Zeichnungen näher erläutert.

Es zeigen:
- Figuren 1a bis 7b: schematische Darstellungen miteinander in Wirkverbindung stehender Komponenten einer Pedalanordnung, bei denen mit unterschiedlichen Möglichkeiten deren Abstand zueinander ausgeglichen wird,
- Figuren 8a bis 11b: schematische Darstellungen der Komponenten einer Pedalanordnung, die über einen Geberzylinder mit einer hydraulischen Strecke verbunden sind, bei denen mit unterschiedlichen Einstellmöglichkeiten der Montagewinkel korrigiert wird.

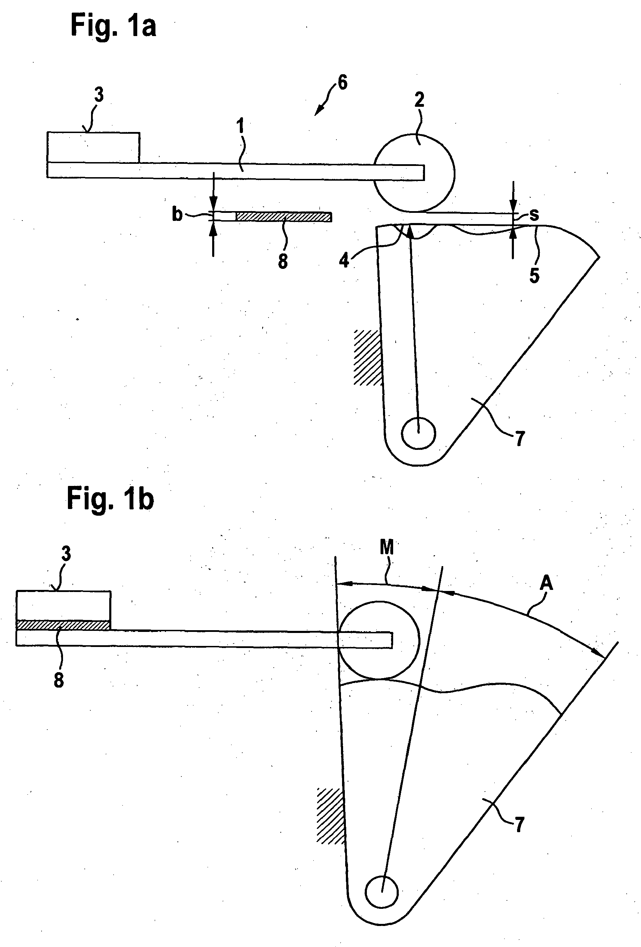

Die Figuren 1a und 1b zeigen Teile der Komponenten einer Pedalanordnung 6 in einer schematischen Darstellung. In Figur 1a ist die Lage der Komponenten vor ihrer Justierung zueinander und in Figur 1b ihre Lage nach ihrer Justierung zu sehen. Dabei sind in diesen Figuren die wesentlichen, eine Wirkverbindung eingehende Komponenten dargestellt. In diesen Figuren ist jeweils eine mit einer Kontur versehene Kurvenscheibe 7 dargestellt, die mit einem durch einen Energiespeicher 1 angefederten Rollkörper 2 in Wirkverbindung zu bringen ist. Der Energiespeicher 1 ist sowohl in diesen Figuren 1a und 1b als auch in allen weiteren Figuren als Blattfeder ausgeführt. Da die Kurvenscheibe 7 ortsfest angeordnet ist, ist eine Justierung nur an den bewegbaren Komponenten möglich. In diesem Ausführungsbeispiel wird davon ausgegangen, dass, wie aus Figur 1a ist erkennbar, zwischen der Oberfläche des Rollkörpers 2 und der Kontur der Kurvenscheibe 7 ein Abstand s vorhanden ist. Dieser Abstand s ergibt sich unabhängig von möglichen Herstellungstoleranzen. Zur Bestimmung der Größe dieses Abstandes s wird, wie aus Figur 1b ersichtlich, zunächst die Kontur der Kurvenscheibe 7 unterteilt in einen Justierbereich M und einen Arbeitsbereich A, wobei die Kontur 4 des Justierbereiches M zur Bestimmung des Abstandes s einen Kreisbogen um den Drehpunkt der Kurvenscheibe 7 bildet. Die Blattfeder 1, an der endseitig der Rollkörper 2 angebracht ist, weist an ihrem anderen Ende, an dem sie mit einer nicht dargestellten Komponente der Pedalanordnung 6, einem Pedal, lösbar befestigt ist, eine Auflagefläche 3 auf.

Zum Ausgleich des Abstandes s wird im Bereich der Auflagefläche 3 zwischen dieser und der Blattfeder 1 ein Ausgleichsmaterial 8 in Form einer Unterlegscheibe eingefügt, deren Breite b der Größe des Abstandes s entspricht, so dass auf diese einfache Weise die Lage der Blattfeder 1 einstellbar ist. Diese Lage der Blattfeder 1 auf der Kontur 4 des Justierbereiches M entspricht demnach einer Nulllage, von der aus alle weiteren Einstellungen ausführbar sind. Ausgehend von dieser Justierung auf die Nulllage ist gewährleistet, dass der Rollkörper 2 sicher auf der Kontur des Arbeitsbereiches A aufliegt und der angestrebte Wert der Vorspannung korrekt eingestellt ist. Die Kurvenkontur kann alternativ auf dem Energiespeicher aufgebracht sein.

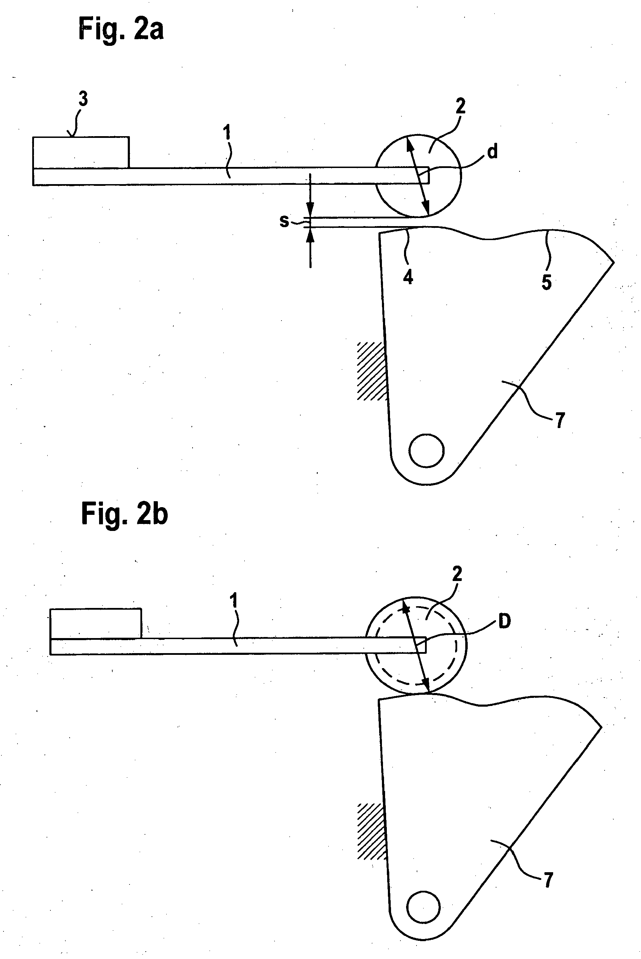

Aus den Figuren 2a und 2b geht eine weitere einfache Lösung zur Justierung der Lage des angefederten Rollkörpers 2 zur Kontur 5 des Arbeitsbereiches A der ortsfesten Kurvenscheibe 7 hervor. Bei dieser Lösung ergibt sich der Abstand s, wie in Figur 2a gezeigt, analog zu Figur 1a, aus dem Abstand der Kontur 4 des Justierbereiches M zur Oberfläche des Rollkörpers 2 mit einem Durchmesser d. Zum Ausgleich dieses Abstandes s wird daher dieser ermittelte Abstand s auf den Durchmesser d des Rollkörpers 2 aufgeschlagen, so dass anstelle des zur Justierung verwendeten Rollkörpers 2 ein neuer Rollkörper 2 mit einem Durchmesser D eingesetzt wird, der unmittelbar auf der Kontur 5 des Arbeitsbereiches A aufsitzt und auf dieser korrekt abrollen kann.

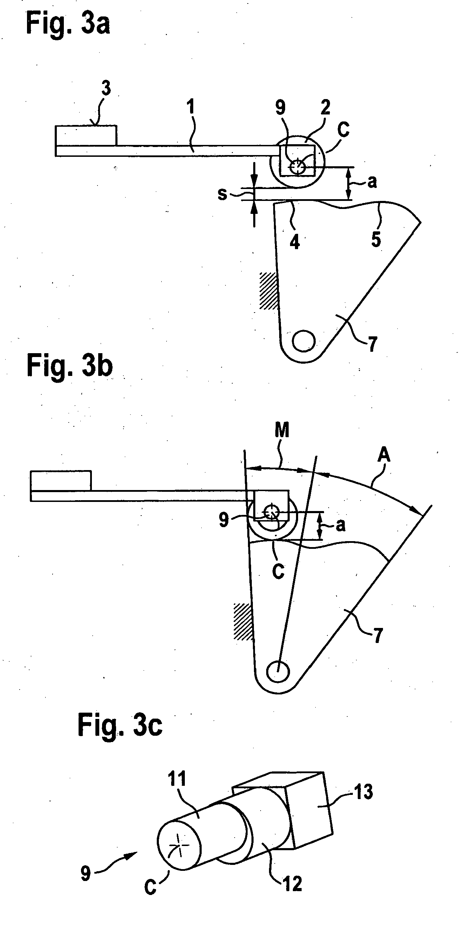

Anstelle der Verwendung eines Rollkörpers 2 mit größerem Durchmesser D kann auch gemäß der Figuren 3a und 3b für den Rollkörper 2 eine exzentrische Achse 9, wie in Figur 3c dargestellt, eingesetzt werden, die je nach Größe des Abstandes s entsprechend als Achse 9 in den Rollkörper 2 eingesetzt wird. Dadurch wird der Abstand a des Mittelpunktes C von der Kontur 4 des Justierbereiches M in den Abstand a' übergeführt, so dass wiederum eine exakte Auflage des Rollkörpers 2 auf der Kontur 5 im Arbeitsbereich A der Kurvenscheibe 7 gewährleistet ist. Aus Figur 3c ist der Aufbau der Achse 9 dargestellt. Nach einem konzentrischen Abschnitt 11 folgt der exzentrische Abschnitt 12, auf dem der Rollkörper 2 fest gelagert ist. Der Abschnitt 13 der Achse 9 weist eine Rechteckform, insbesondere einen Vierkant, auf, die dazu dient, die Achse 9 in einer Aufnahme gegen Verdrehung zu sichern. Auf dem konzentrischen Abschnitt 11 der Achse 9 liegt die Blattfeder 1 auf, um den Rollkörper 2 anzufedern.

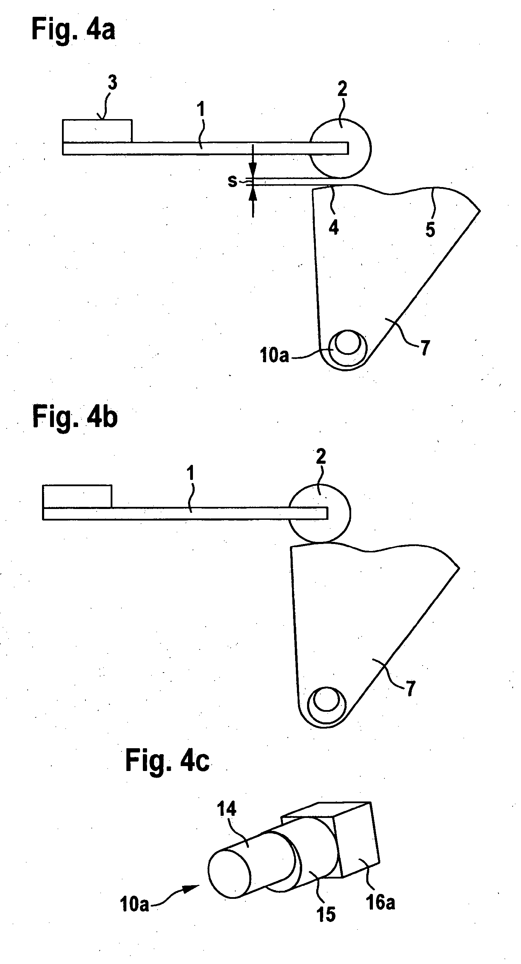

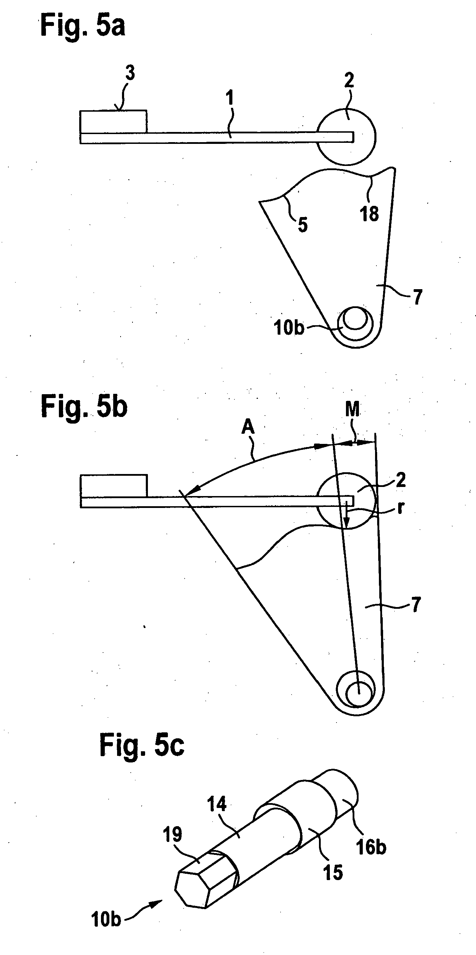

Die Figuren 5a und 5b stellen die Bauteile analog zu den Figuren 4a und 4b dar, bei denen die Lagejustierung über eine exzentrische Achse, hier der Achse 10b, erfolgt. Der Unterschied zu den Figuren 4a und 4b besteht allerdings darin, dass anstelle der Kontur 4 mit einem geraden Bereich im Justierbereich M eine Kontur 18 im Justierbereich M aufgebracht ist. Diese Kontur 18 ist im Justierbereich M als Vertiefung bzw. Positioniermulde ausgeführt, die den gleichen Radius r wie der Rollkörper 2 aufweist. Damit entspricht die Position in der Höhe der Vertiefung dem korrekten Vorspannmaß für die Blattfeder 1. Die Achse 10b, weist ebenso wie die Achse 10a in Figur 4a, neben konzentrischen Bereichen 14 und 16b zur Aufnahme in einem nicht dargestellten Pedalbock einen exzentrischen Bereich 15 auf, auf dem, wie in den Figuren 4a und 4b die Konturscheibe 7 gelagert ist, und einen Bereich 19, der in diesem Falle mit einer Schlüsselfläche ausgestattet ist. Durch Verdrehen dieser Schlüsselfläche 19 und damit der Verdrehung des exzentrischen Bereiches 15, wird der Rollkörper 2 mit der Kontur 18 in Kontakt gebracht, die wie in Figur 5b gezeigt, als Vertiefung 18 bzw. Positioniermulde ausgebildet ist, und schließlich in deren Vertiefung 18 bzw. Positioniermulde einsinkt und damit in dieser Lage positioniert wird. Durch diese Lagejustierung ist nicht nur die Vorspannung der Blattfeder 1, sondern auch die Zuordnung des Winkels der Kontur 5 des Arbeitsbereiches A mit dem nicht dargestellten Pedal exakt eingestellt. Nach dieser Justierung ist allerdings noch eine in dieser Figur nicht dargestellte Lagefixierung der Konturscheibe 7 erforderlich, um ein Verstellen dieser Lagejustierung zu verhindern.

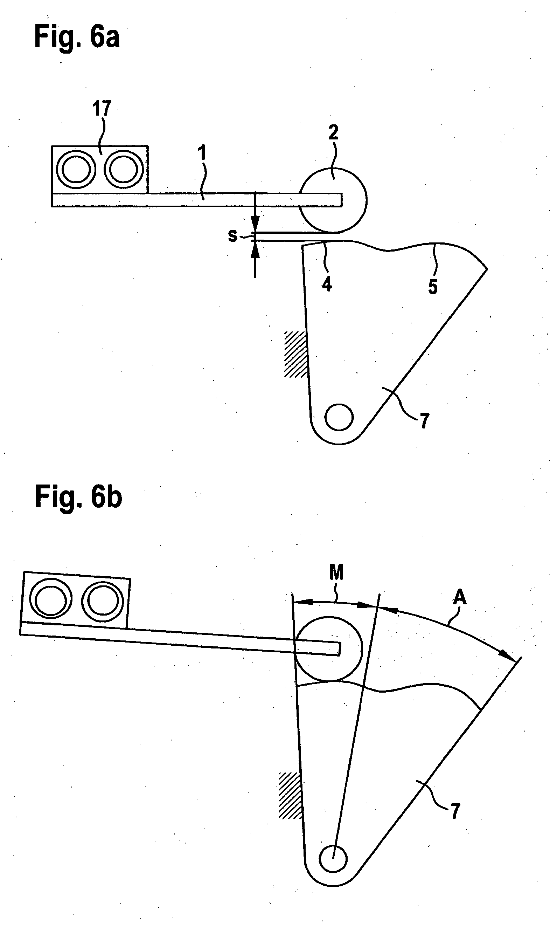

Die Figuren 6a und 6b zeigen die Komponenten für eine Pedalanordnung 6 gemäß der Figuren 1 a und 1b, wobei eine andere Möglichkeit der Auflage der Blattfeder 1 gewählt ist. Bei dieser Variante ist die Auflagefläche 17 senkrecht zur Ebene der Blattfeder 1 ausgeführt. In Figur 6a ist dargestellt, dass diese Auflagefläche 17 so lange verdreht wird, um den Abstand s zwischen dem Rollkörper und der Kontur 4 des Justierbereiches M auszugleichen, bis die Blattfeder 1 korrekt positioniert ist und anschließend in dieser Position fixiert wird. Die Fixierung kann dabei beispielsweise über eine Nietverbindung erfolgen. Bei dieser Variante ist wiederum die Kurvenscheibe 7 ortsfest angeordnet.

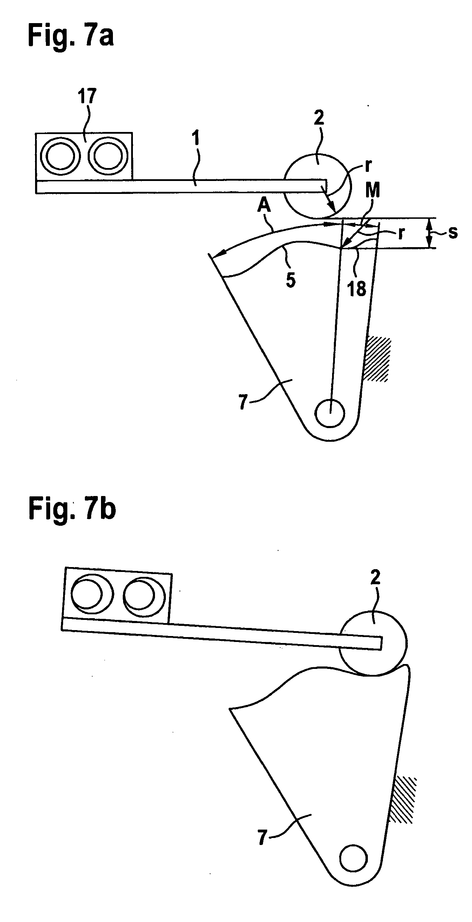

Die Figuren 7a und 7b sind analog zu den Figuren 6a und 6b ausgeführt. Der Unterschied zu diesen besteht jedoch darin, dass wiederum analog zu den Figuren 5a und 5b die Kontur 4 im Justierbereich M als Positioniermulde 18 mit dem gleichen Radius r wie der Rollkörper 2 ausgeführt ist. Durch diese Justiermöglichkeit der Blattfeder 1 können nicht nur die Vorspanntoleranzen, sondern auch die Winkeltoleranzen zwischen den miteinander in Eingriff zu bringenden Bauteilen ausgeglichen werden.

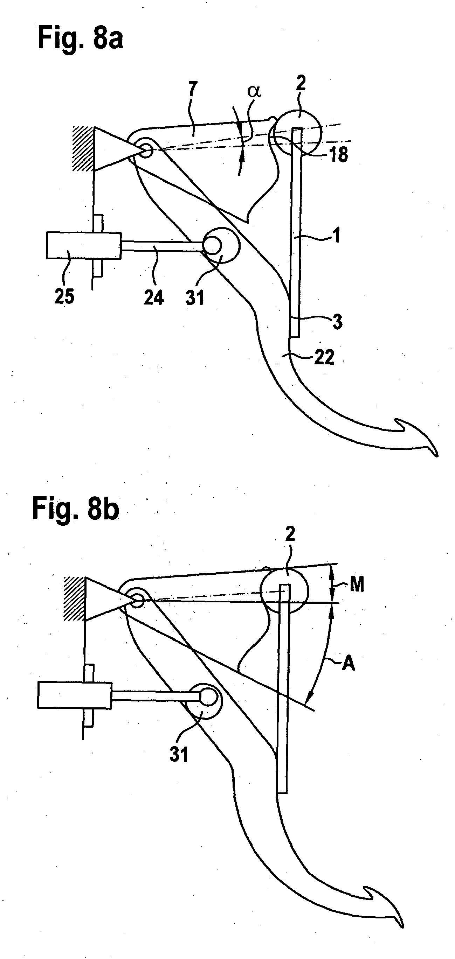

Die Figuren 8 bis 11 zeigen Varianten der Justierung zum Toleranzausgleich der Kontur 18 des Justierbereiches M der Kurvenscheibe 7, zu der an die Pedalanordnung 6 gekoppelten Kolbenstange 24 eines Geberzylinders 25.

Aus den Figuren 8a und 8b sind die Komponenten der Pedalanordnung 6 im zusammengebauten Zustand und deren Anlenkung an eine hydraulische Strecke mittels eines Geberzylinders 25, bzw. dessen Kolbenstange 24, erkennbar. Hieraus ist die Anlenkung des Endes der Blattfeder 1 im Bereich der Auflagefläche 3 an ein Pedal 22 ersichtlich, wobei das andere Ende der Blattfeder 1 mit dem Rollkörper 2 verbunden ist, der bei Betätigung des Pedals 22 an der Kontur der Kurvenscheibe 7 entlang geführt wird, wobei die Kurvenscheibe 7 wiederum ortsfest angebracht ist. In Figur 8a wird dargestellt, dass ein zu korrigierender Montagewinkel α vorhanden ist, der sich ergibt aus der Mittellinie der Positioniermulde 18 durch den Pedaldrehpunkt und der Verlängerung der Achse des Rollkörpers 2 zu diesem. Die Kontur der Kurvenscheibe 7 ist ebenfalls, wie in den vorhergehenden Varianten, in einen Justierbereich M und einen Arbeitsbereich A unterteilt. Hierbei ist die Kontur der Kurvenscheibe 7 im Justierbereich, wie in den Figuren 3a, 3b und 5a, 5b als Positioniermulde 18 ausgeführt. Zur Justierung des Abstandes zwischen dem Pedal 22 und der ausgelenkten Kolbenstange 24, bei der sich der Rollkörper 2 in der Positioniermulde 18 befinden sollte, wird das Ende der Kolbenstange 24 mit einem exzentrischen Bolzen 31 versehen. In Figur 8a befindet sich der Rollkörper 2 noch nicht in dieser Positioniermulde 18, so dass der exzentrische Bolzen 31 noch nicht fest mit der Kolbenstange 24 verbunden ist. In Figur 8b dagegen befindet sich der Rollkörper in der Positioniermulde 18, also in der Nullposition, in der die Lagezuordnung der Kolbenstange 24 mit dem Pedal 22 fixiert wird. Dies geschieht über eine Fixierung der entsprechenden Stellung und damit der Exzentrizität des Bolzens 31 an der Kolbenstange 24.

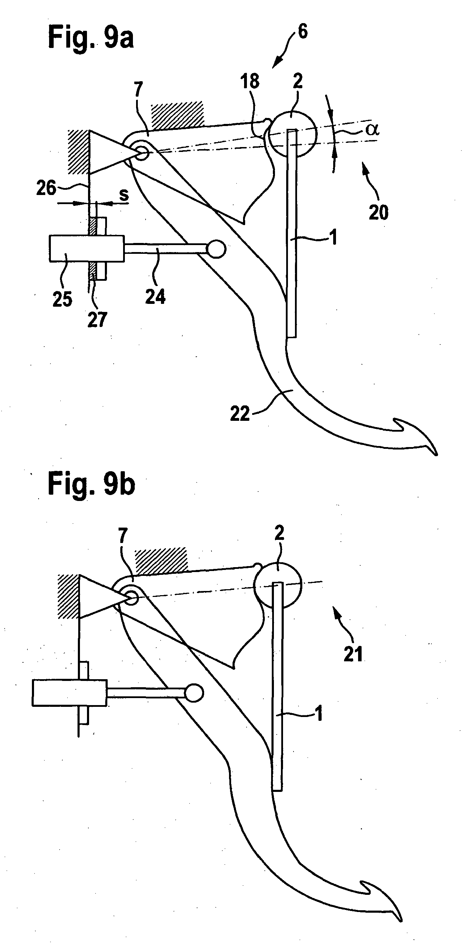

Die Figuren 9a und 9b zeigen die Komponenten der Pedalanordnung 6 gemäß der Figuren 8a und 8b. Im Unterschied zu diesen ist die Kolbenstange 24 auf herkömmliche Weise am Pedal 22 angelenkt und die Justierung erfolgt über eine zwischen der Befestigungsfläche des Geberzylinders 25 und dessen für diese vorgesehene Anschraubfläche zwischengelegte Einstellscheibe 27. Die Dicke dieser Einstellscheibe 27, die sich ergibt aus dem Abstand zwischen Befestigungsfläche und Anschraubfläche, kann in dem Moment ermittelt werden, in dem sich der Rollkörper 2 in der Positioniermulde 18 befindet. Aus Figur 9a ist ersichtlich, dass die Position 20 des Montagewinkels α des Pedals 22 und damit der Kolbenstange 24, nicht korrekt ist, da sich der Rollkörper 2 noch nicht in seiner Positioniermulde 18 befindet. In Figur 9b hat der Rollkörper 2 seine Position in der Positioniermulde 18 eingenommen, so dass nunmehr das Pedal 22 die korrekte Position 21 des Montagewinkels α erreicht hat.

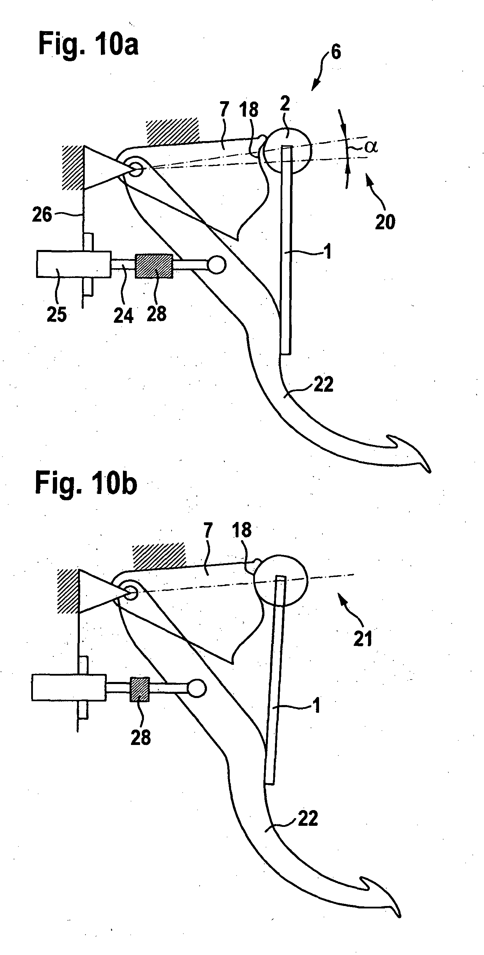

Aus den Figuren 10a und 10b geht eine weitere Möglichkeit der Justierung durch eine Längenanpassung der Kolbenstange 24 hervor. Ebenso wie in Figur 9a befindet sich in Figur 10a der Rollkörper 2 noch nicht in seiner Positioniermulde 18, so dass die Lage der Blattfeder 1 und damit das Pedal 22 zum an einem Pedalbock 26 angebrachten Geberzylinder 25 noch nicht korrekt ist, was durch die zu korrigierende Position 20 des Montagewinkels α dargestellt ist. In Figur 10b, wo sich der Rollkörper 2 in der Positioniermulde 18 befindet, ist auch die korrigierte Position 21 des Montagewinkels α erreicht, indem die Länge der Kolbenstange 24 geändert wurde. Entweder wird diese auf eine entsprechende Länge verkürzt, wie in Figur 10b dargestellt, oder aber die Kolbenstange 24 erhält eine Verlängerung 28 bzw. es findet eine längere Kolbenstange 24 Verwendung.

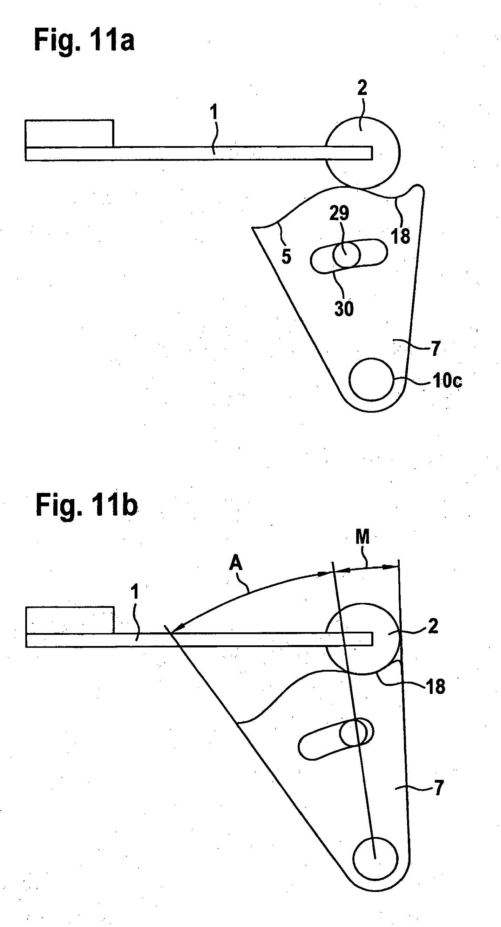

In den Figuren 11a und 11b wird eine weitere Variante der Lagejustierung der Komponenten - angefederter Rollkörper 2 - zur Kontur der Kurvenscheibe 7 vorgestellt. In diesen Figuren ist die Kontur der Kurvenscheibe 7 wiederum analog zu den Figuren 5 und 7 bis 10 mit einer Kontur 18 im Justierbereich M und einer Kontur 5 im Arbeitsbereich A versehen, wobei die Kontur 18 wiederum als Positioniermulde ausgebildet ist. Im Unterschied zu den Figuren 1 bis 10 ist die Kurvenscheibe 7 mit einem Langloch 30 versehen, das in radialer Richtung verläuft. In Figur 11a befindet sich der Rollkörper 2 wiederum in der nicht justierten Position, das heißt, er hat noch nicht die Nullstellung in der Positioniermulde 18 des Justierbereiches M eingenommen. Da in dieser Variante die Kurvenscheibe 7 um ihre Pedalachse 10c verschwenkbar angeordnet ist, wird durch Lösen der Klemmschraube 29 erreicht, so dass die Positioniermulde 18 durch die Federkraft des Rollkörpers 2 automatisch in die korrekte Position um die Achse 10c geschwenkt wird, wodurch wiederum, wie in den vorangegangenen Figuren, ein stabiles Gleichgewicht hergestellt ist. Damit ist die Nullstellung der miteinander in Wirkverbindung stehenden Komponenten erreicht. Nachfolgend wird bei ganz eingekuppelter Pedalstellung gegen den Pedalbock 26 diese Nullstellung mit Hilfe einer in der Bogennut 30 angeordneten Klemmschraube 29 fixiert. Diese auf diese Weise fixierte Stellung der Kurvenscheibe 7 ist aus Figur 11b ersichtlich.

### Bezugszeichenliste

- 1: Energiespeicher / Blattfeder
- 2: Rollkörper
- 3: Auflagefläche
- 4: Kontur des Justierbereiches
- 5: Kontur des Arbeitsbereiches
- 6: Pedalanordnung
- 7: Kurvenscheibe
- 8: Ausgleichsmaterial / Unterlegscheibe
- 9: Achse mit Exzenter / exzentrische Lagerung
- 10a: Achse mit Exzenter / exzentrische Lagerung
- 10b: Achse mit Exzenter
- 10c: Pedalachse
- 11: Konzentrischer Bereich
- 12: Exzentrischer Bereich
- 13: Bereich mit Rechteck- bzw. Vierkantform
- 14: Konzentrischer Bereich
- 15: Exzentrischer Bereich
- 16: Bereich mit Rechteck- bzw. Vierkantform
- 16b: Konzentrischer Bereich
- 17: Auflagefläche
- 18: Vertiefung / Positioniermulde
- 19: Bereich / Schlüsselfläche
- 20: Winkelposition vor Justierung
- 21: Korrekte / korrigierte Winkelposition
- 22: Pedal
- 24: Kolbenstange
- 25: Geberzylinder
- 26: Pedalbock
- 27: Einstellscheibe
- 28: Längenkorrektur
- 29: Klemmschraube
- 30: Langloch / Bogennut
- 31: Exzentrischer Bolzen

- A: Arbeitsbereich
- C: Achsmittelpunkt
- M: Justierbereich
- α: Montagewinkel
- a: Abstand
- a': Abstand
- b: Breite
- r: Radius
- s: Abstand
- d: Durchmesser
- D: Durchmesser

## Patentansprüche

1. Vorrichtung zur Justierung der Lage miteinander in Wirkverbindung stehender Komponenten einer Pedalanordnung (6) zur Unterstützung der Pedalkraft in einem Fahrzeug, die aus den Komponenten Pedalbock (26), Pedal (22), Kurvenscheibe (7), Energiespeicher (1) und Rollkörper (2) gebildet wird und eine Kurvenkontur (5) entweder auf der Kurvenscheibe (7) oder dem Energiespeicher (1) aufgebracht ist, wobei der Energiespeicher (1) an einem Ende eine Auflagefläche (3) aufweist, und wobei der Rollkörper (2) in einem Arbeitsbereich (A) mit der Kurvenkontur (5) in Wirkverbindung steht und die Pedalanordnung (6) an eine Kolbenstange (24) eines Geberzylinders (25) anschließbar ist, und wobei die Kurvenkontur zusätzlich zum Arbeitsbereich (A) einen Justierbereich (M) aufweist, mit dem der Rollkörper (2) in Kontakt bringbar ist, **dadurch gekennzeichnet, dass** zwischen der Auflagefläche (3) und dem Energiespeicher (1) ein Ausgleichsmaterial (8) vorgesehen ist.

2. Vorrichtung nach Anspruch 1, **dadurch gekennzeichnet, dass** diesem Justierbereich (M) eine Kurvenkontur (4, 18) zugeordnet ist.

3. Vorrichtung nach Anspruch 1, **dadurch gekennzeichnet, dass** die Kurvenkontur (4) Teil eines Kreisbogens um den Drehpunkt der Kurvenscheibe (7) ist.

4. Vorrichtung nach Anspruch 1, **dadurch gekennzeichnet, dass** der Energiespeicher (1) als Blattfeder ausgeführt ist.

5. Vorrichtung nach Anspruch 1, **dadurch gekennzeichnet, dass** die Kurvenkontur (18) als Vertiefung bzw. Positioniermulde ausgebildet ist.

6. Verfahren zur Justierung der Lage miteinander in Wirkverbindung stehender Komponenten einer Pedalanordnung (6) zur Unterstützung der Pedalkraft in einem Fahrzeug, die aus den Komponenten Pedalbock (26), Pedal (22), Kurvenscheibe (7), Energiespeicher (1) und Rollkörper (2) gebildet wird und eine Kurvenkontur (5) entweder auf der Kurvenscheibe (7) oder dem Energiespeicher (1) aufgebracht ist, wobei der Rollkörper (2) in einem Arbeitsbereich (A) zur Kurvenkontur (5) einen Abstand (s) aufweist und die Pedalanordnung (6) an eine Kolbenstange (24) eines Geberzylinders (25) anschließbar ist, **dadurch gekennzeichnet, dass** der Abstand (s) zwischen Rollkörper (2) und Kurvenkontur (4) durch mindestens eine Einstellscheibe (27) ausgleichbar ist.

7. Verfahren nach Anspruch 6, **dadurch gekennzeichnet, dass** der Abstand (s) zwischen dem Rollkörper (2) mit einem Durchmesser (d) und der Kurvenkontur (4) durch Verwendung eines Rollkörpers (2) mit einem Durchmesser (D) ausgleichbar ist.

8. Verfahren nach Anspruch 6, **dadurch gekennzeichnet, dass** der Abstand (s) zwischen Rollkörper (2) und Kurvenkontur (4) durch eine exzentrische Lagerung (9) des Rollkörpers (2) ausgleichbar ist.

9. Verfahren nach Anspruch 6, **dadurch gekennzeichnet, dass** der Abstand (s) zwischen Rollkörper (2) und Kurvenkontur (4) durch eine exzentrische Lagerung (10a) der Kurvenscheibe (7) ausgleichbar ist.

10. Verfahren nach den Ansprüchen 6 und 9, **dadurch gekennzeichnet, dass** der Abstand (s) zwischen Rollkörper (2) und Kurvenkontur (4) zusätzlich zur exzentrischen Lagerung (10a) durch die Positionsfindung mittels einer als Positioniermulde (18) ausgebildeten Vertiefung der Kontur (4) im Justierbereich (M) ausgleichbar ist.

11. Verfahren nach Anspruch 6, **dadurch gekennzeichnet, dass** der Abstand (s) zwischen Rollkörper (2) und Kurvenkontur (4, 18) durch eine Verstellung einer Auflagefläche (17) an der Blattfeder (1) ausgleichbar ist.

12. Verfahren nach Anspruch einem der Ansprüche 6 bis 11, **dadurch gekennzeichnet, dass** ein Montagewinkel α zwischen der Mitte der Kontur (18) und der Stellung der Achse des Rollkörpers (2) durch einen exzentrischen Bolzen (31) ausgeglichen wird.

13. Verfahren nach Anspruch 12, **dadurch gekennzeichnet, dass** ein Ausgleich des Montagewinkels α durch Zwischenlegen einer Einstellscheibe (27) zwischen dem Pedalbock und der Befestigungsfläche des Geberzylinders (25) erfolgt.

14. Verfahren nach Anspruch 12, **dadurch gekennzeichnet, dass** ein Ausgleich des Montagewinkels α durch eine Längenanpassung (28) der Kolbenstange (24) erfolgt.

15. Verfahren nach Anspruch 12, **dadurch gekennzeichnet, dass** ein Ausgleich des Montagewinkels α durch Lösen einer in einem radial verlaufenden, in die Kurvenscheibe (7) eingebrachten Langloches (30), eingesetzten Klemmschraube (29), automatisch durch die Anfederung des Rollkörpers (2) erfolgt.

## Claims

1. Apparatus for adjusting the position of components of a pedal arrangement (6) which are operatively connected to one another in order to support the pedal force in a vehicle, which pedal arrangement (6) is formed from the components of pedal block (26), pedal (22), cam disc (7), energy store (1) and rolling element (2), and a cam contour (5) is applied either on the cam disc (7) or the energy store (1), the energy store (1) having a bearing face (3) at one end, and the rolling element (2) being operatively connected to the cam contour (5) in a working region (A), and it being possible for the pedal arrangement (6) to be connected to a piston rod (24) of a master cylinder (25), and, in addition to the working region (A), the cam contour having an adjusting region (M), with which the rolling element (2) can be brought into contact, **characterized in that** a compensating material (8) is provided between the bearing face (3) and the energy store (1).

2. Apparatus according to Claim 1, **characterized in that** the said adjusting region (M) is assigned a cam contour (4, 18).

3. Apparatus according to Claim 1, **characterized in that** the cam contour (4) is part of an arc about the pivot point of the cam disc (7).

4. Apparatus according to Claim 1, **characterized in that** the energy store (1) is configured as a leaf spring.

5. Apparatus according to Claim 1, **characterized in that** the cam contour (18) is configured as a depression or positioning recess.

6. Method for adjusting the position of components of a pedal arrangement (6) which are operatively connected to one another in order to support the pedal force in a vehicle, which pedal arrangement (6) is formed from the components of pedal block (26), pedal (22), cam disc (7), energy store (1) and rolling element (2), and a cam contour (5) is applied either on the cam disc (7) or the energy store (1), the rolling element (2) being at a spacing (s) from the cam contour (5) in a working region (A), and it being possible for the pedal arrangement (6) to be connected to a piston rod (24) of a master cylinder (25), **characterized in that** the spacing (s) between the rolling element (2) and the cam contour (4) can be compensated by way of at least one adjustment disc (27).

7. Method according to Claim 6, **characterized in that** the spacing (s) between the rolling element (2) having a diameter (d) and the cam contour (4) can be compensated by way of the use of a rolling element (2) having a diameter (D).

8. Method according to Claim 6, **characterized in that** the spacing (s) between the rolling element (2) and the cam contour (4) can be compensated by way of an eccentric mounting (9) of the rolling element (2).

9. Method according to Claim 6, **characterized in that** the spacing (s) between the rolling body (2) and the cam contour (4) can be compensated by way of an eccentric mounting (10a) of the cam disc (7).

10. Method according to Claims 6 and 9, **characterized in that**, in addition to the eccentric mounting (10a), the spacing (s) between the rolling element (2) and the cam contour (4) can be compensated by way of the positioning by means of a depression of the contour (4) in the adjusting region (M), which depression is configured as a positioning recess (18).

11. Method according to Claim 6, **characterized in that** the spacing (s) between the rolling element (2) and the cam contour (4, 18) can be compensated by way of an adjustment of a bearing face (17) on the leaf spring (1).

12. Method according to one of Claims 6 to 11, **characterized in that** a mounting angle α between the centre of the contour (18) and the position of the axis of the rolling element (2) is compensated by way of an eccentric pin (31).

13. Method according to Claim 12, **characterized in that** the mounting angle α is compensated by way of an adjustment disc (27) being inserted between the pedal block and the fastening face of the master cylinder (25).

14. Method according to Claim 12, **characterized in that** the mounting angle α is compensated by way of a length adaptation (28) of the piston rod (24).

15. Method according to Claim 12, **characterized in that** the mounting angle α is compensated automatically by way of the suspension of the rolling element (2), by way of the release of a clamping screw (29) which is inserted into a radially running slot (30) which is made in the cam disc (7).

## Revendications

1. Dispositif d'ajustement de la position de composants, en liaison fonctionnelle les uns avec les autres, d'un agencement de pédale (6) pour assister la force de pédale dans un véhicule, lequel agencement de pédale est formé à partir des composants que sont un support de pédale (26), une pédale (22), une came (7), un accumulateur d'énergie (1) et un corps de roulement (2), et un contour de came (5) étant appliqué soit sur la came (7) soit sur l'accumulateur d'énergie (1), l'accumulateur d'énergie (1) présentant, à une extrémité, une surface d'appui (3) et le corps de roulement (2) étant en liaison fonctionnelle avec le contour de came (5) dans une région de travail (A) et l'agencement de pédale (6) pouvant être raccordé à une tige de piston (24) d'un maître-cylindre (25), et le contour de came comprenant, en plus de la région de travail (A), une région d'ajustement (M) avec laquelle le corps de roulement (2) peut être amené en contact, **caractérisé en ce qu'**un matériau de compensation (8) est prévu entre la surface d'appui (3) et l'accumulateur d'énergie (1).

2. Dispositif selon la revendication 1, **caractérisé en ce qu'**un contour de came (4, 18) est associé à cette région d'ajustement (M).

3. Dispositif selon la revendication 1, **caractérisé en ce que** le contour de came (4) fait partie d'un arc de cercle autour du centre de rotation de la came (7).

4. Dispositif selon la revendication 1, **caractérisé en ce que** l'accumulateur d'énergie (1) est configuré en tant que ressort à lame.

5. Dispositif selon la revendication 1, **caractérisé en ce que** le contour de came (18) est réalisé en tant que renfoncement ou évidement de positionnement.

6. Procédé d'ajustement de la position de composants, en liaison fonctionnelle les uns avec les autres, d'un agencement de pédale (6) pour assister la force de pédale dans un véhicule, lequel agencement de pédale est formé à partir des composants que sont un support de pédale (26), une pédale (22), une came (7), un accumulateur d'énergie (1) et un corps de roulement (2), et un contour de came (5) étant appliqué soit sur la came (7) soit sur l'accumulateur d'énergie (1), le corps de roulement (2) étant disposé à une distance (s) du contour de came (5) dans une région de travail (A) et l'agencement de pédale (6) pouvant être raccordé à une tige de piston (24) d'un maître-cylindre (25), **caractérisé en ce que** la distance (s) entre le corps de roulement (2) et le contour de came (4) peut être compensée par au moins un disque de réglage (27).

7. Procédé selon la revendication 6, **caractérisé en ce que** la distance (s) entre le corps de roulement (2) présentant un diamètre (d) et le contour de came (4) peut être compensée par l'utilisation d'un corps de roulement (2) présentant un diamètre (D).

8. Procédé selon la revendication 6, **caractérisé en ce que** la distance (s) entre le corps de roulement (2) et le contour de came (4) peut être compensée par un montage excentrique (9) du corps de roulement (2).

9. Procédé selon la revendication 6, **caractérisé en ce que** la distance (s) entre le corps de roulement (2) et le contour de came (4) peut être compensée par un montage excentrique (10a) de la came (7).

10. Procédé selon les revendications 6 et 9, **caractérisé en ce que** la distance (s) entre le corps de roulement (2) et le contour de came (4) peut être compensée, en plus du montage excentrique (10a), par le positionnement au moyen d'un renfoncement, réalisé en tant qu'évidement de positionnement (18), du contour (4) dans la région d'ajustement (M).

11. Procédé selon la revendication 6, **caractérisé en ce que** la distance (s) entre le corps de roulement (2) et le contour de came (4, 18) peut être compensée par un déplacement d'une surface d'appui (17) sur le ressort à lame (1).

12. Procédé selon l'une quelconque des revendications 6 à 11, **caractérisé en ce qu'**un angle de montage α entre le centre du contour (18) et la position de l'axe du corps de roulement (2) est compensé par un boulon excentrique (31).

13. Procédé selon la revendication 12, **caractérisé en ce qu'**une compensation de l'angle de montage α s'effectue par interposition d'un disque de réglage (27) entre le support de pédale et la surface de fixation du maître-cylindre (25).

14. Procédé selon la revendication 12, **caractérisé en ce qu'**une compensation de l'angle de montage α s'effectue par une adaptation de longueur (28) de la tige de piston (24).

15. Procédé selon la revendication 12, **caractérisé en ce qu'**une compensation de l'angle de montage α s'effectue automatiquement par suspension du corps de roulement (2), par desserrage d'une vis de serrage (29) insérée dans un trou oblong (30) s'étendant radialement et ménagé dans la came (7).
